# EUROPEAN PATENT APPLICATION

(11) **EP 3 524 574 A1**
(43) Date of publication of application: **14.08.2019**
(21) Application number: 18156529.2
(22) Date of filing: 13.02.2018
(51) Int. Cl.: C01B 37/00, B01J 21/18, C01B 39/00, C25B 3/04, C01B 32/05

(54) **FE-N-C CATALYST, METHOD OF PREPARATION AND USES THEREOF**

(71) Applicant: Gaznat SA, Société pour l'pprovisionnement et le transport du gaz naturel en Suisse Romande, 1003 Lausanne (CH)
(72) Inventor: HU, Xile, 1162 SAINT-PREX (CH); GU, Jun, 1007 LAUSANNE (CH)
(74) Representative: reuteler & cie SA

(57) **Abstract**

The invention relates to single-atom Fe catalysts useful for the electrochemical reduction of carbon dioxide, method of preparation as uses thereof. In particular, the invention relates to a method of preparation of Fe(II) doped ZIF precursor material and use thereof in the preparation of a catalyst containing Fe single atoms on N doped carbon matrix derived from the pyrolysis of this Fe(II) doped ZIF precursor material.

## Description

### Field of the Invention

The present invention pertains generally to the fields of electrochemical reduction of carbon dioxide, in particular to catalysts for CO₂ electro-reduction.

### Background of the Invention

Atmospheric carbon dioxide (CO₂) levels rising has become a global concern with envisioned cascade of environmental consequences including damaging climate changes which could impact modern civilization. Since the amounts of CO₂ that have been produced in the last fifty years are considerable, multiple approaches need to be implemented in order to decrease those amounts. Among those, electrochemical reduction of CO₂ into useful chemicals including carbon monoxide (CO), formic acid, methane and ethylene have been developed (Jhong et al., 2013, Current Opinion in Chemical Engineering, 2(2), 191-199)*.*

Therefore, electroreduction of CO₂ to CO in aqueous electrolyte is considered as a promising technique to convert CO₂ and electricity to CO and O₂, which immobilize CO₂, produce valuable chemical at the same time and will allow recycling spent CO₂ into a "carbon neutral" cycle. Electrochemical reduction of CO₂ to form carbon-based fuels and chemicals has been widely proposed for the storage and utilization of intermittent renewable energies such as solar and wind *(*Zhu et al., 2016, Adv Mater., 28(18), 3423-52)*.* However, two major deficiencies have prevented CO₂ electroreduction from becoming a viable technology: energy inefficiency due to large overpotentials and poor selectivity leading to separation issues. If CO is the only product of CO₂ reduction, the product can be directly used in the synthesis of hydrocarbons (Fischer-Tropsch synthesis), methanol and aldehyde by feeding H₂ to a proper CO:H₂ ratio.

Over the past three decades, efforts have mostly focused on screening different metal catalysts and the various products that can be formed using those metals. Unfortunately, the conversion was often low (<20 mA/cm²) under overpotential lower than 400 mV and the selectivity for the desired product was also low.

Up to now, the most active catalysts for CO generation from CO₂ electroreduction are Au and Ag based nano-materials (Chen et al., 2012, J. Am. Chem. Soc., 134, 19969-19972*;* Zhu et al., 2014, J. Am. Chem. Soc., 136, 16132-16135*;* Lu et al., 2014, Nat. Commun., 5, 3242*)* and up to now, the most active two catalysts for CO generation from CO₂ electroreduction are (1) oxide derived Au (*Chen et al., 2012, supra*): at -0.4 V vs reversible hydrogen electrode (RHE), the generation rate of CO is 8 mA·cm⁻²; (2) Au needles electrode (Liu et al., 2016, Nature, 537, 328): at -0.35 V vs RHE, the current density of CO formation was about 14 mA·cm⁻². However, the high cost of this catalyst limits the large-scale usage. The performances of most non-noble metal catalysts, such as Cu and Zn, are much poorer (Li et al., 2012, Am. Chem. Soc., 134, 7231-7234*,* Li et al., 2017, J. Am. Chem. Soc., 139, 4290-4293*;* Won et al., 2016, Angew. Chem. Int. Ed., 55, 9297-9300)*.* Catalysts containing earth abundant metal like Fe, Co and Ni have been developed but the partial current densities are still lower than that on Au and Ag based catalysts. In particular, a commercial zeolitic imidazole framework (ZIF), ZIF-8, Fe(II) acetate (Fe(Ac)₂) and phenanthroline (phen) were used as precursors which were mixed by ball-milling before pyrolysis, leading to catalytic materials of various performance but all achieving a generation rate of CO much lower than Au catalyst, namely about 2 mA·cm⁻² at -0.4 V (Huan et al., 2017, ACS Catal., 7, 1520)*.*

Therefore, CO₂ conversion through catalytic processes in a selective and efficient manner is of high interest and there is a high need for performant catalysts allowing achieving a cost-effective selective CO₂ conversion.

### Summary of the Invention

An object of this invention is to provide a catalyst material useful for the electroreduction of CO₂ to CO in aqueous electrolyte.

It is advantageous to provide a catalyst material having a high catalytic activity allowing increasing CO₂ electroreduction rates, while maintaining a high selectivity to CO formation.

It is advantageous to provide a catalyst material having a production cost that allows a large scale use.

It is advantageous to provide a catalyst material which is stable over time of use, thereby limiting the amounts of catalytic material to use per reduction process and avoiding the need of costly catalyst regeneration, which would reduce the overall production costs of the CO₂ electroreduction products.

It is advantageous to provide a catalyst that is made of abundant metals that allows a large scale use.

It is advantageous to provide a cost-effective method for the preparation of an efficient catalyst material useful for the electroreduction of CO₂ to CO in aqueous electrolyte.

It is advantageous to prepare a catalyst from readily available chemical reagents.

An object of this invention is to provide a method for the electroreduction of CO₂ to CO in aqueous electrolyte which is selective and cost effective.

Objects of this invention have been achieved by providing a use according to claim 1, a method according to claim 2 and a catalyst material according to claim 13.

Disclosed herein, according to a first aspect of the invention, is a use of a catalyst material containing Fe single atom on N doped carbon matrix prepared from a Fe(II)-doped zeolitic imidazole framework (ZIF) for the electroreduction of CO₂ to CO.

Disclosed herein, according to a second aspect of the invention, is a method for the preparation of a catalyst material comprising the steps of:
**a)** Providing a Fe(II)-doped zeolitic imidazole framework (ZIF) in dried form under inert atmosphere;
**b)** Subjecting said Fe(II)-doped ZIF to a pyrolysis under inert atmosphere during about 2 to about 24 hours, typically 3 hours;
**c)** Collecting the obtained pyrolysis product as a catalyst material.

The method may advantageously comprise providing a Fe(II)-doped ZIF which is obtained by a method comprising the steps of:
**(i)** Providing an imidazole or imidazole derivate precursor;
**(ii)** Dissolving the said imidazole or imidazole derivate precursor in degassed polar solvent such as methanol or ethanol in a reductive environment to prevent the oxidization of Fe²⁺ cations, for example in presence of a iodide derivative such as potassium, sodium or ammonium iodide (KI, or NaI or NH₄I), to obtain a solution A;
**(iii)** Dissolving an iron (II) precursor, such as FeCl₂ FeCl₂·4H₂O, Fe(CH₃COO)₂, and a zinc salt such as Zn(NO₃)₂ or ZnCl₂, in degassed methanol degassed polar solvent such as methanol or ethanol to obtain a solution B;
**(iv)** Adding solution B into solution A;
**(v)** Collecting and washing the precipitate;
**(vi)** Leaving the washed precipitate drying at room temperature to obtain a Fe(II)-doped Zeolitic imidazole framework (ZIF) in the form of a dry powder, wherein steps (ii) to (vi) are conducted under stirring in an inert atmosphere;
**(vii)** Collecting the Fe(II)-doped zeolitic imidazole framework (ZIF) in the form of a dry powder under an inert atmosphere.

Disclosed herein, according to a third aspect of the invention, is a catalyst material comprising Fe single atoms on N doped matrix carbon derived from the pyrolysis of a Fe(II)-doped ZIF.

Disclosed herein, according to a further aspect of the invention, is a use of a catalyst material comprising Fe single atoms on N doped matrix carbon derived from the pyrolysis a Fe(II)-doped ZIF for the electroreduction of CO₂ to CO.

Disclosed herein, according to a further aspect of the invention, is a process for the electrochemical reduction of carbon dioxide to CO comprising the steps of:
- Providing a electroreduction system for the electrochemical reduction of CO₂;
- Providing a catalyst material comprising Fe single atoms on N doped matrix carbon according to the invention;
- Contacting the said catalyst material with the working electrode of the electroreduction system;
- Conducting the electroreduction reaction of CO₂ into CO;
- Collecting the released gas containing CO, small amount of H₂ and unreacted CO₂.

Disclosed herein, according to a further aspect of the invention, is provided an electroreduction system or part of an electrreduction system (e.g. a support electrode) for the electrochemical reduction of CO₂ comprising a catalyst material according to the invention.

Disclosed herein, according to a further aspect of the invention, is a kit for use in the electroreduction of CO₂, comprising a catalyst material according to the invention.

Disclosed herein, according to a further aspect of the invention, is a kit for the preparation of a catalyst material according to the invention, the kit comprising a container comprising a Fe(II)-doped zeolitic imidazole framework (ZIF) in dry form and under inert atmosphere.

Disclosed herein, according to a further aspect of the invention, is a kit for the preparation of a Fe(II)-doped zeolitic imidazole framework (ZIF) suitable for use for the preparation of a catalyst material according to the invention, the kit comprising in separate compartments or containers:
**a)** an imidazole or imidazole derivate precursor;
**b)** an iodide derivative such as potassium, sodium or ammonium iodide (KI, or NaI or NH₄I);
**c)** an iron (II) precursor, such as FeCl₂ or Fe(CH₃COO)₂; and
**d)** a zinc salt such as Zn(NO₃)₂ or ZnCl₂.

Other features and advantages of the invention will be apparent from the claims, detailed description, and figures.

### Brief Description of the drawings

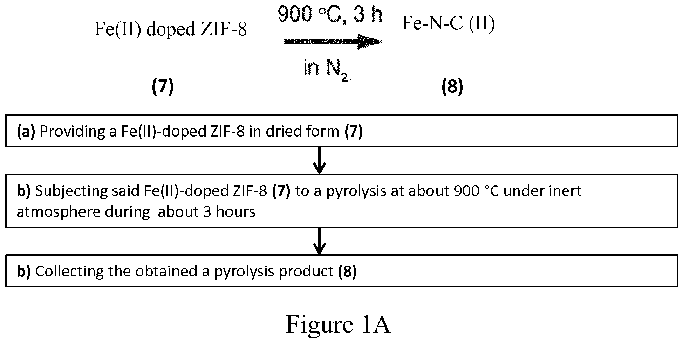

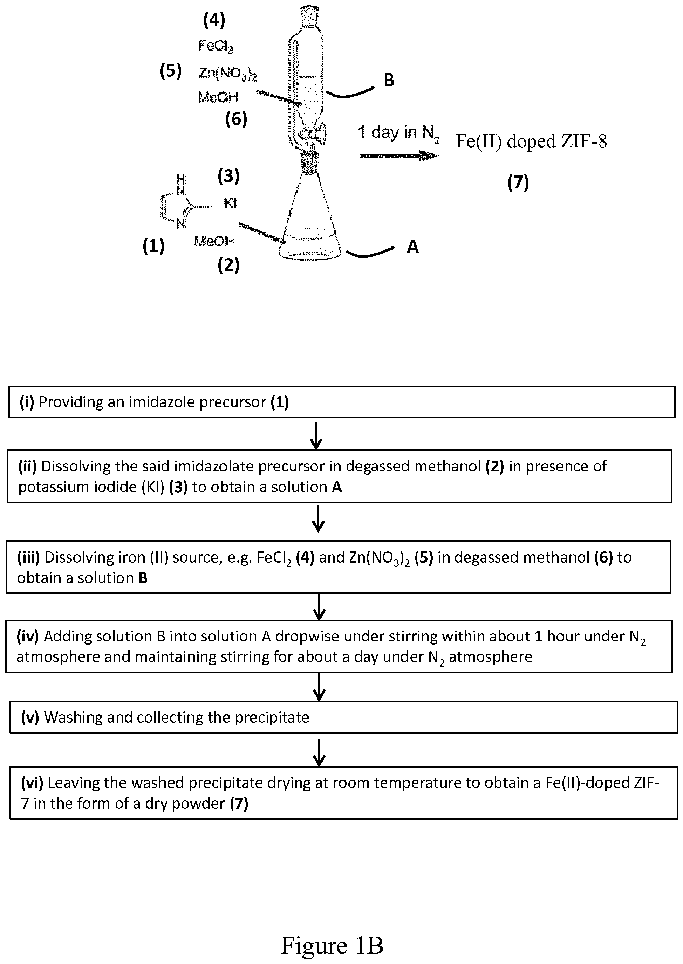

**Figure 1** illustrates a process for obtaining a catalyst material comprising Fe single atoms on N doped carbon matrix (Fe-N-C (II)) according to the invention **(A)** and a method for obtaining a Fe(II) doped ZIF-8 precursor according to the invention for this catalyst material **(B).**

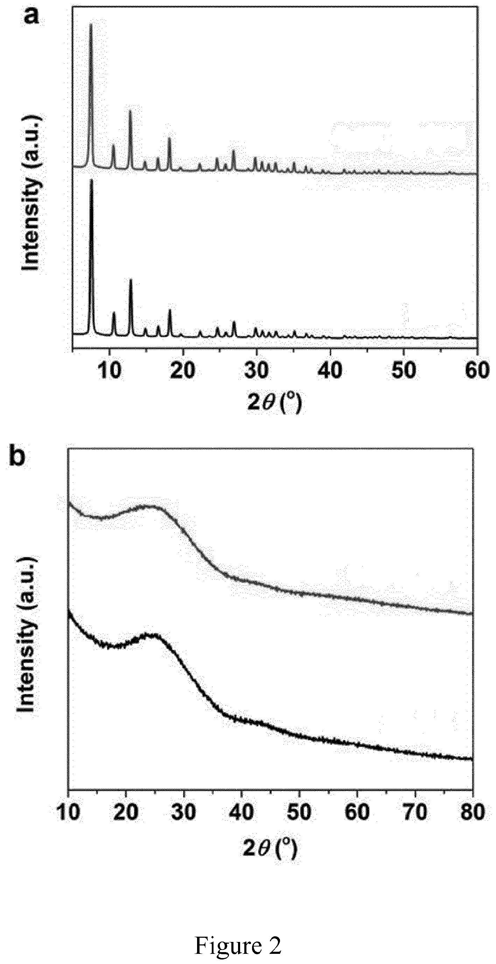

**Figure 2** provides the X-ray diffraction patterns for the precursors before pyrolysis **(a)** and the corresponding pyrolysis products **(b)** of Fe(II) doped ZIF-8 precursor **(top)** and non-doped ZIF-8 **(bottom),** as described in Example 3.

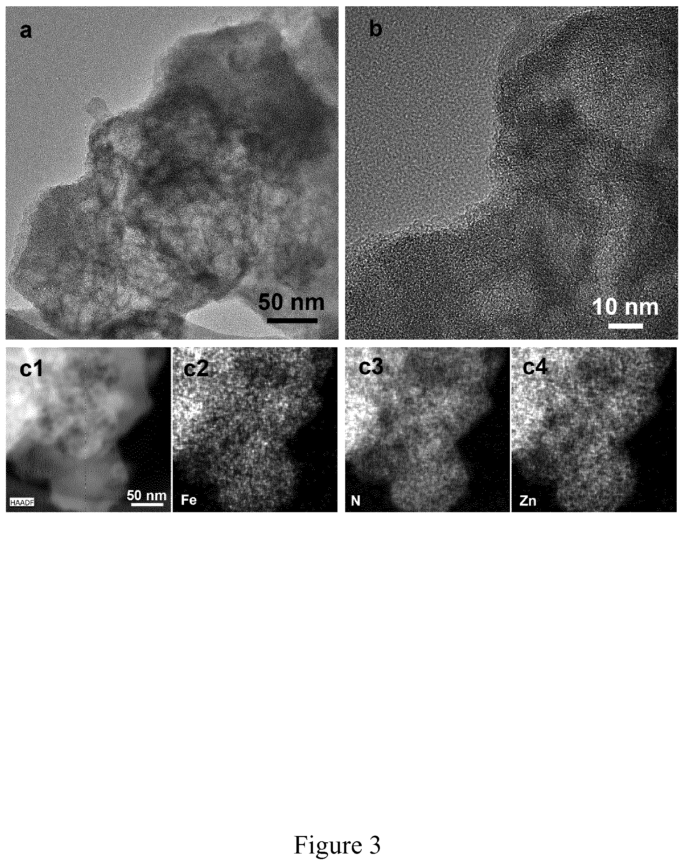

**Figure 3** provides the electron microscopic characterization by **(a)** transmission electron microscopy (TEM) and **(b)** high-resolution transmission electron microscopy (HRTEM) imaging and **(c)** energy dispersive spectroscopy (EDS)-mapping described in Example 3 of the catalytic material of the invention. The distributions of Fe, N and Zn are shown in **c2, c3** and **c4,** respectively.

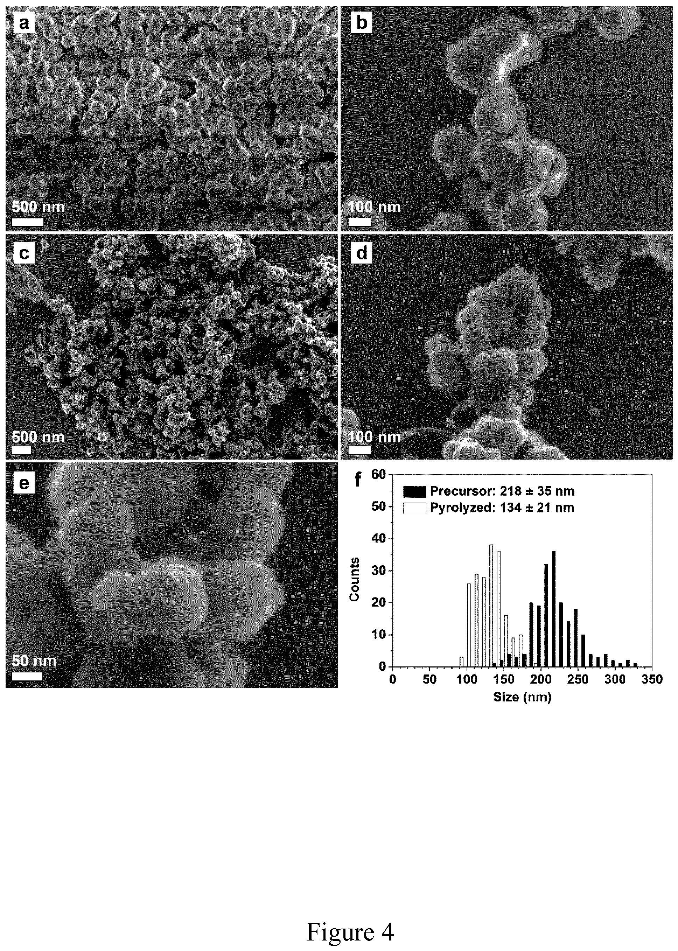

**Figure 4** provides the electron microscopic characterization by scanning electron microscopy (SEM) imaging as described in Example 3 of the catalytic material of the invention. **a and b:** Fe(II) doped ZIF-8 precursor before pyrolysis; **c, d and e:** pyrolysis product obtained from the Fe(II) doped ZIF-8 precursor; **f:** particle size distribution diagrams of Fe(II) doped ZIF-8 before pyrolysis (light) and pyrolysis product (dark).

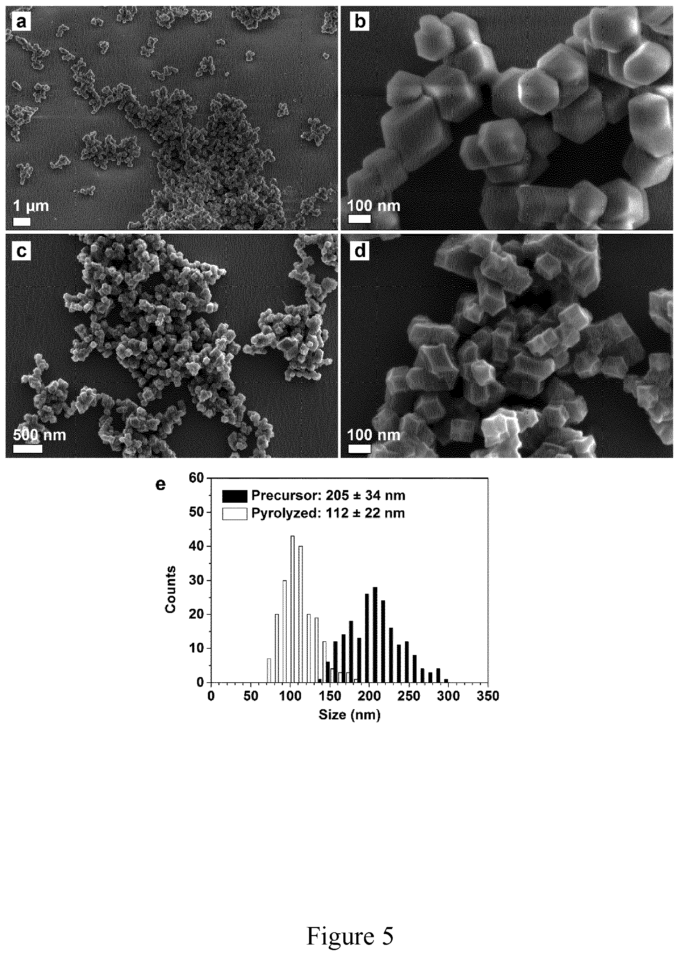

**Figure 5** provides the electron microscopic characterization by scanning electron microscopy (SEM) imaging as described in Example 3 of a comparative material (Fe-N-C (III)) prepared by the pyrolysis of Fe (III) doped ZIF-8. **a and b: comparative** Fe(III) doped ZIF-8 precursor before pyrolysis; **c and d:** pyrolysis product from the Fe(III) doped ZIF-8 precursor; **e:** particle size distribution diagrams of Fe(III) doped ZIF-8 before pyrolysis (light) and pyrolysis product (dark).

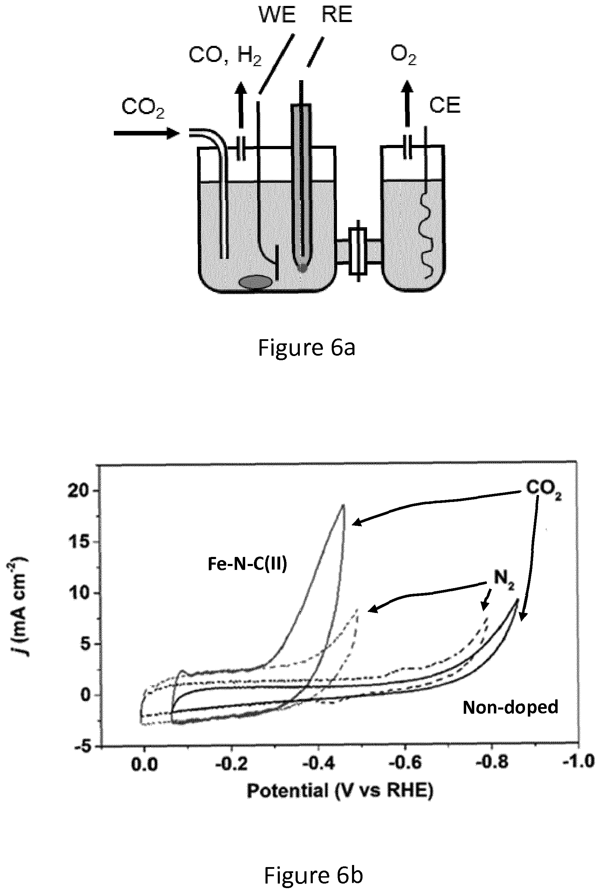

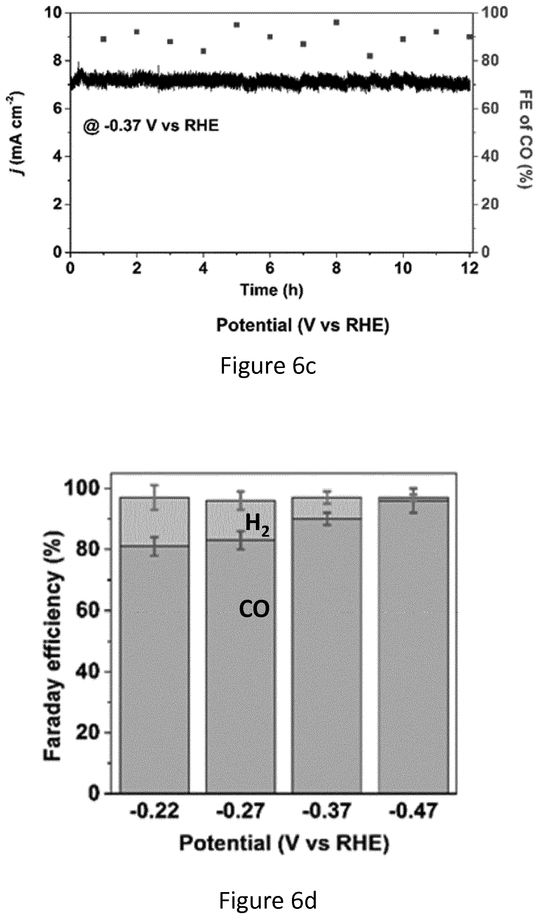

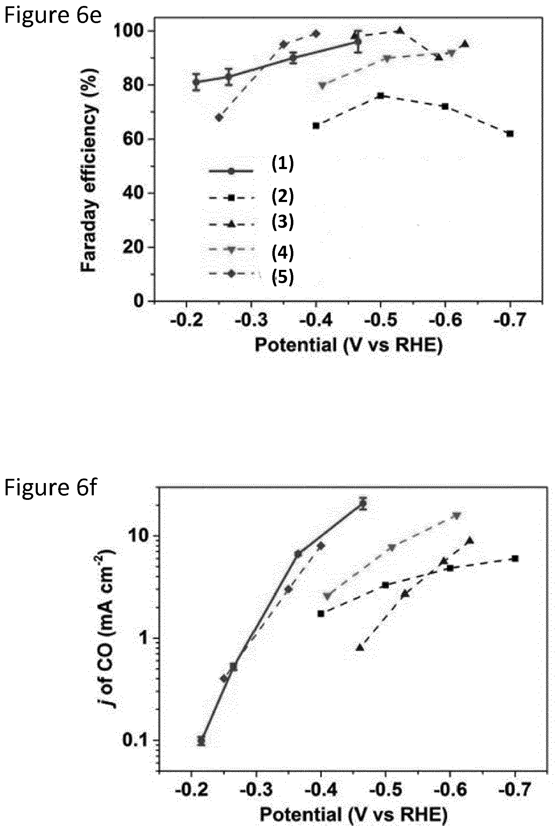

**Figure 6** presents the electrochemical characterization of the performance of the catalytic material of the invention obtained as described in Example 2, compared to other materials in an electrolysis test using 0.5 M KHCO₃ as electrolyte as described in Example 4. **a:** Schematic representation of the electrolysis test conducted in an electroreduction system for the electrochemical reduction of CO₂ comprising a working electrode (WE, carbon cloth with catalyst material deposited on its surface by drop-casting, as described in Example 4), a counter electrode (RE, platinum wire) and a reference electrode (RE, Ag/AgCl, saturated KCl solution electrode); **b:** Stable cyclic voltammetry (CV) curves obtained with the Fe-N-C(II) material of the invention and the pyrolysis product of un-doped ZIF-8 material in CO₂ (solid curves) and N₂ (dashed curves) saturated electrolyte; **c:** Chronoamperometry curve of the catalytic material of the invention ("Fe-N-C(II)" in CO₂ saturated electrolyte at -0.37 V vs RHE. Dots show the Faraday efficiencies of CO. **d:** Faraday efficiency of CO **(bottom)** and H₂ **(top)** of the Fe-N-C(II) material at different applied potentials. Comparison of Faraday efficiencies **(e)** and partial current densities **(f)** of CO on the Fe-N-C(II) material (solid curve) and other catalysts (dashed curves) at different applied potentials. **(1):** Fe-N-C(II) material of the invention at 0.6 mg/cm²: 3 mg of the catalyst was dispersed in 1 mL of ethanol, and 200 µL of the dispersion was dropped on a carbon cloth electrode of 1 cm × 1 cm; **(2):** comparative material Fe-N-C material (Fe 0.5d) from *Huan et al., 2017, supra* at 1 mg/cm²: 1 mg of the catalyst was dispersed to 200 µL and dropped on a carbon paper electrode of 1 cm²; **(3):** comparative material CoPc/CNT from *Zhang et al., 2017, Nat. Commun., 8, 14675* at 0.4 mg/cm²: CoPc/CNT was prepared by the adsorption of Co phthalocyanine molecules on multi-walled carbon nanotubes in DMF. 2 mg of the catalyst was dispersed to 1 mL and 100 µL of the dispersion was dropped on a carbon fibre paper electrode of 0.5 cm²; **(4):** Porous Ag from *Lu et al., 2014, supra*: Porous Ag electrode was prepared by acid etching of *α*-Al(Ag) alloy synthesized at 546 °C and **(5):** Oxide derived (OD) Au from *Chen et al., 2012, supra*: The OD Au electrode was prepared by applying symmetric 1 kHz square-wave pulses between 2.70 V and 0.70 V on Au foil in 0.5 M H₂SO₄ electrolyte for 60 min.

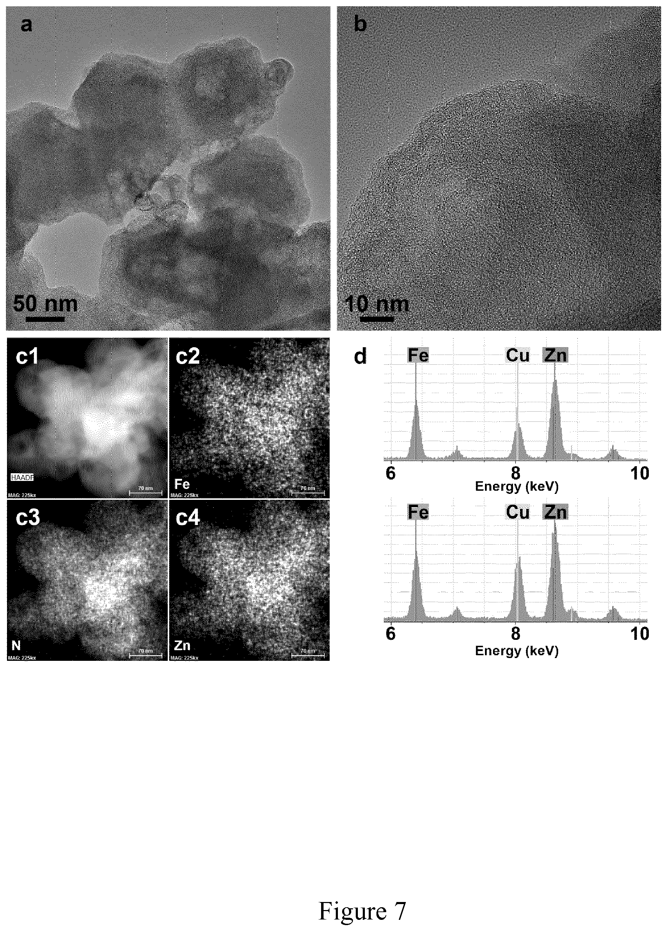

**Figure 7** provides the electron microscopic characterization by **(a)** transmission electron microscopy (TEM) and **(b)** high-resolution transmission electron microscopy (HRTEM) imaging, **(c)** EDS-mapping of the material of the invention after electrolysis as described in Example 5. The distributions of Fe, N and Zn are shown in **c2, c3** and **c4,** respectively and **(d)** EDS spectra Fe-N-C(II) material before **(top)** and after **(bottom)** electrolysis.

### Detailed Description of the invention

Zeolitic imidazolate frameworks (ZIFs) are a sub-family of metal organic frameworks (MOFs) which can be synthesized by solvothermal/hydrothermal and microwave assisted reactions at temperatures in the 298-423 K range. ZIFs adopt porous crystalline structures composed of metal ions and organic linkers, ordered in an analogous fashion to that of silicon and oxygen in zeolites.

The tetrahedral metal centers [e.g. M = Zn(II)] are solely coordinated by nitrogen atoms in the 1,3-positions of the imidazolate bridging ligand to give overall neutral frameworks. Imidazolate ligands are generally obtained with phenyl (benzimidazolate (PhIM)) or methyl (2-methylimidazolate (MeIM)) groups (Park et al., 2006, PNAS, 103(7), 10186-10191)*.* ZIF-8, which can be easily synthesized at room temperature and stable in water, is a zeolite structure with tetrahedrally coordinated zinc metal and 2-methylimidazole rings (Zn(MeIM)₂)) and has a sodalite topology (SOD) exhibiting a 3D structure with cages of 11.6 A in diameter, which are accessible through 3.4

A windows. Zn sites in ZIF can be substituted by other divalent metal cations with tetragonal coordination mode such as Fe²⁺ and Co²⁺, and the inner space of ZIFs can accommodate complexes of other metal cations such as Fe³⁺, Ni²⁺ and Cu²⁺. In the frame of the present invention, it has been unexpectedly found that, by using Fe²⁺-doped zeolitic imidazole frameworks (ZIFs), in particular ZIF-8, as a precursor material for carrying a pyrolysis according to a process of the invention, a catalyst material containing Fe single atoms on N doped carbon matrix with CO₂ electroreduction performance similar to oxide derived Au catalyst can be obtained.

The performances of a catalyst can be measured through Faradaic efficiency (FE), partial current density of CO formation and stability (Jones et al., 2014, Isr. J. Chem. 54, 1451-1466)*.* Typically, a catalyst having a Faradaic efficiency higher than 80% for applied potential more positive than -0.6 V vs RHE, a partial current density of CO formation higher than 10 mA·cm⁻², which indicates a generation rate of CO higher than 3.3 mL·h⁻¹·cm⁻² is considered as being a very efficient catalyst.

The expression "an imidazole or imidazole derivate precursor" refers to a precursor of an imidazole precursor that is able to form an imidazole bridge with the tetrahedral metal ions within a zeolitic imidazolate framework structure. Examples of imidazole precursors are cited in Han et al., 2009, Accounts of chemical research, 43(1), 58-67 and *Park et al., 2006, supra.* In particular, an imidazole or imidazole derivate precursor comprises 2-ethylimidazole, 2-methylimidazole, 4-nitroimidazole, 4,5-dichloronitroimidazole, imidazolate-2-Carboxylaldehyde, 4-cyanoimidazole, benzimidazole, methylbenzimidazole, 4-azabenzimidazole, 5-azabenzimidazole and purine.

The expression "iodide derivative" comprises potassium iodide, sodium iodide, ammonium iodide, tetramethylammonium iodide, tetraethylammonium iodide and tetrabutylammonium iodide.

The expression "an iron (II) precursor" refers to any iron (II) containing precursor suitable for doping a ZIF. Examples of iron (II) precursor according to the invention include dehydrate or hydrate FeCl₂, FeSO₄, (NH₄)₂Fe(SO₄)₂·6H₂O, Fe(CH₃COO)₂, and Fe(II) acetylacetonate.

The expression "Zn salt" refers to any Zn containing salt suitable for the preparation of a zeolitic imidazolate framework structure. Examples of a zinc salt according to the invention includes dehydrate or hydrate Zn(NO₃)₂, ZnCl₂, ZnSO₄, Zn(ClO₄)₂, ZnBr₂, Zn(CH₃COO)₂ and Zn acetylacetonate.

The expression "a reductive environment to prevent the oxidization of Fe²⁺ cations" encompasses introducing reductive agents include Na₂SO₃, K₂SO₃, ascorbic acid and formaldehyde.

Referring to the figures, in particular first to **Figure 1A****,** is provided an illustration of a method for the preparation of a catalyst material containing Fe single atom on N doped matrix comprising the steps of:
**a)** Providing a Fe(II)-doped zeolitic imidazole framework (ZIF), for example a Fe(II)-doped ZIF-8 **(7)** in dried form under inert atmosphere;
**b)** Subjecting said Fe(II)-doped ZIF-8 to a pyrolysis under inert atmosphere during about 2 to about 24 hours;
**c)** Collecting the obtained pyrolysis product as a catalyst material.

In an embodiment, the Fe(II)-doped zeolitic imidazole framework (ZIF) is provide in dried form in

N₂ atmosphere or immerged in hexane. Typically, a Fe(II)-doped zeolitic imidazole framework (ZIF) according to the invention is stable under inert atmosphere.

According to another further particular embodiment, the Fe(II)-doped zeolitic imidazole framework (ZIF) is provided on a support under inert atmosphere and the pyrolysis under step b) is carried our directly on said support.

In an embodiment, the pyrolysis under step b) is carried out for about 3 hours.

In an embodiment, the pyrolysis under step b) is carried out at a temperature between about 800 and 950 °C, typically 900 °C.

In another embodiment, the pyrolysis under step b) is carried out through the ramping of temperature at a rate of about 2 to 10 °C. min⁻¹, for example 5 °C. min⁻¹.

In another embodiment, the inert atmosphere is provided by a N₂ flow, e.g. with a flow rate of 50 to 150 mL·min⁻¹.

In another embodiment, the method for the preparation of a catalyst material according to the invention may advantageously comprise providing Fe(II)-doped ZIF material which is obtained by a method according to the invention.

Referring to **Figure 1B****,** is provided an illustration of a specific embodiment regarding steps of a method for preparing a Fe(II)-doped ZIF which is obtained by a method comprising the steps of:
**(i)** Providing an imidazole precursor, in particular a 2-methyl imidazole precursor **(1);**
**(ii)** Dissolving the said imidazole precursor in degassed polar solvent such as methanol **(2)** in presence of an iodide derivative such as potassium iodide (KI) **(3)** to obtain a solution A;
**(iii)** Dissolving an iron (II) precursor such as FeCl₂ **(4)** and a zinc salt such as Zn(NO₃)₂·6H₂O **(5)** in degassed polar solvent such as methanol **(6)** to obtain a solution B;
**(iv)** Adding solution B into solution A;
**(v)** Collecting and washing the precipitate;
**(vi)** Leaving the washed precipitate drying at room temperature to obtain a Fe(II)-doped ZIF-8 **(8)** in the form of a dry powder, wherein steps (ii) to (vi) are conducted under stirring in an inert atmosphere;
**(vii)** Collecting the Fe(II)-doped zeolitic imidazole framework (ZIF) in the form of a dry powder under an inert atmosphere.

In another embodiment, the method for preparing a Fe(II)-doped ZIF comprises dissolving an iron (II) precursor and a zinc salt under step **(iii)** to obtain a solution B such that the molar ratio Fe to Zn is from about 1:20 to about 1:4, preferably not higher than 1:9.

In another embodiment, the method for preparing a Fe(II)-doped ZIF comprises adding solution B into solution A dropwise under stirring for about 1 hour.

In a further embodiment, the method for preparing a Fe(II)-doped ZIF comprises keeping the reacting mixture obtained under step **(iv)** under stirring under inert atmosphere for about one day after the completion of the addition of solution B.

In a further embodiment, the method for preparing a Fe(II)-doped ZIF comprises collecting the precipitate under step **(v)** by filtration at ambient pressure or centrifugation, under inert atmosphere.

In a further embodiment, the method for preparing a Fe(II)-doped ZIF comprises washing the precipitate under step **(v)** by washing the collected precipitate by a solvent sequence. According to a further particular embodiment, the washing is carried out by a solvent sequence comprising a washing with N,N-dimethylformamide (DMF) and a washing with methanol twice.

In another embodiment, the inert atmosphere is provided by a confined reaction space under inert atmosphere (e.g. glove box filled with N₂).

According to another embodiment, the Fe(II)-doped zeolitic imidazole framework (ZIF) of the invention collected in dry form under step **(vii)** can be stored for about 1 week in an air-protected atmosphere (e.g. under N₂ atmosphere or immerged in hexane) before conducting the pyrolysis.

In a further embodiment, the method for preparing a Fe(II)-doped ZIF further comprises a step **(viii)** of dispersing the dried precipitate obtained under step **(vii)** in hexane for storing it in an air-protected atmosphere, before subjecting it to pyrolysis.

In a particular embodiment, the Fe(II)-doped ZIF according to the invention is directly obtained or deposited on a support, for example on a support electrode (e.g. carbon cloth or carbon fibre paper).

In a particular embodiment, a catalyst material containing Fe single atom on N doped carbon matrix prepared from a Fe(II)-doped zeolitic imidazole framework (ZIF) according to the invention is useful in a process of electroreduction of CO₂ to CO and can be usefully part of an electroreduction system for the electrochemical reduction of CO₂ and/or a kit for use in the electroreduction of CO₂.

According to a particular embodiment, a catalyst material according to the invention can be deposited on the surface of a working electrode of an electroreduction system.

According to a further particular embodiment, a catalyst material according to the invention can be deposited on a surface by spin coating, drop casting or by dip coating, spray coating. According to a particular embodiment, a catalyst material according to the invention can be mixed with a binding agent such as a resin or a polymer to adhere to the surface of use. Carbon nanotubes or carbon fibres may be added into the mixture to increase the strength of the deposit. For example, the deposit can be achieved by drying a solution of the catalyst, the binding agent and optionally carbon nanotubes or carbon fibres onto the desired surface.

According to another further particular embodiment, a catalyst material according to the invention can be coated or deposited on a surface of use, in particular on the surface of an electrode for or of an electroreduction system. More particularly, a mixture of the catalyst material and a binding agent can be pressed into a membrane electrode for use in an electroreduction system.

Alternatively and according to another further particular embodiment, a catalyst material according to the invention can be prepared through the pyrolysis of a Fe(II) doped ZIF-8 directly grown or deposited on a support, for example on a support electrode (e.g. carbon cloth or carbon fibre paper).

According to a further aspect of the invention, is a kit for use in the electroreduction of CO₂, comprising a catalyst material according to the invention, for example the kit comprises the catalyst in dry form in a container (e.g. vial, cartridge etc..) or as a deposit on a surface such as a support electrode.

According to a particular embodiment, is provided an electroreduction system or part of an electrreduction system (e.g. a support electrode) for the electrochemical reduction of CO₂ comprising a catalyst material according to the invention, for example a catalyst material in dry form in a container (e.g. vial, cartridge etc..) or as a deposit on a surface such as a support electrode of the electroreduction system.

According to a particular embodiment, an electroreduction system according to the invention is a three electrodes system (working electrode, counter electrode and reference electrode) using KHCO₃ or NaHCO₃ aqueous solution as electrolyte, saturated by CO₂ of 1 atm, under stirring.

According to a particular embodiment, the working electrode of an electroreduction system is a carbon cloth.

The invention having been described, the following examples are presented by way of illustration, and not limitation.

### EXAMPLES

### Example 1: Preparation of a Fe(II) doped ZIF precursor

A method of the invention for the preparation of a Fe(II)-doped zeolitic imidazole frameworks (ZIFs) according to the invention is illustrated on **Figure 1B** for a Fe(II) doped zinc imidazolate (ZIF-8). In order to prevent the oxidation of Fe(II) species during the reaction, the reaction medium, i.e. methanol (MeOH) or ethanol was degassed by bubbling N₂ before usage and the synthesis of Fe(II) doped ZIF-8 material was conducted in a glove box as follows:

### Providing an imidazolate precursor preparing a solution A:

First, 1.314 g of 2-methylimidazole (2-mIm) is provided as an imidazolate precursor and 0.076 g of potassium iodide (KI) were dissolved in 15 mL of MeOH to form solution A.

### Providing iron (II) chloride preparing a solution B:

0.080 g of FeCl₂·4H₂O or 0.063 g of FeCl₂ as a Fe (II) precursor and 1.190 g of Zn(NO₃)₂·6H₂O were dissolved in 25 mL of MeOH to form solution B.

### Adding solution B into solution A under stirring under inert atmosphere:

Then, solution B was added into solution A dropwise under stirring at room temperature in 1 hour, and the solution became turbid and slightly yellow gradually. The mixture was kept under stirring for 1 day in N₂ atmosphere after the addition of solution B.

### Washing and collecting the precipitate:

The precipitate was separated by filtration under ambient pressure in glove box and washed by DMF once and MeOH twice in sequence. Then, the washed precipitate was dried under vacuum at room temperature for 30 min and Fe(II)-doped ZIF-8 was collected as a white powder and placed in a corundum crucible and immersed in hexane to isolate the precursor with air during the transfer from the glove box to the tube furnace for pyrolysis. Fe(II) doped ZIF-8 can be stored by sealing under N₂ atmosphere or merged in hexane. The dry form can be stored for about one week. The obtained yield based on Zn is about 90% and about 50% of Fe loaded was doped into the ZIF.

### Example 2: Preparation of a catalytic material of the invention from a Fe(II) doped ZIF

A method of the invention for the preparation of a catalyst containing Fe single atoms on N doped carbon matrix obtained from a Fe(II) doped ZIF according to the invention is illustrated on **Figure 1A** using the Fe(II) doped zinc imidazolate (ZIF-8) obtained in Example 1 as a precursor for pyrolysis. The Fe(II) doped zinc imidazolate (ZIF-8) precursor obtained in Exampled 1 was immersed in hexane during the transfer from glove box to the tube furnace to prevent possible oxidation caused by exposing to air. The pyrolysis is then carried out in the tube furnace with N₂ with a flow rate of 100 mL·min⁻¹ at 900 °C for 3 hours with a ramping rate of 5 °C·min⁻¹. The catalytic material resulting from the pyrolysis is obtained as a black powder. The obtained yield based on Fe is about 90%.

### Example 3: Characterization of the Fe(II) doped zinc imidazolate (ZIF-8) precursor and its pyrolyzed product

The X-ray diffraction (XRD) patterns of the un-doped ZIF-8 prepared with the same method in **Example 1** except that FeCl₂ or FeCl₂·4Ft₂O was not added and of the Fe(II) doped zinc imidazolate (ZIF-8) precursor of the invention were compared as reported on **Figure 2a****.** The XRD patterns of the materials obtained after pyrolysis of un-doped ZIF-8 and Fe(II) doped ZIF-8 were compared as reported on **Figure 2b****.** To prepare the sample for XRD characterization, the solid form of the material was first dispersed in small amount of ethanol, dropped on a glass slide and dried naturally. The XRD measurements were conducted on an X'Pert™ Philips diffractometer with monochromatic Cu Kα radiation and a fast Si-PIN multi-strip detector.

As shown on **Figure 2a****,** un-doped ZIF-8 **(top)** and Fe(II) doped ZIF-8 **(bottom)** have similar X-ray diffraction (XRD) patterns, indicating that the crystal structure of ZIF-8 did not change upon doping of Fe(II). **Figure 2b** compares the XRD patterns of pyrolysis products obtained from the Fe(II) doped ZIF-8 precursor of the invention obtained in Example 2 **(top)** and obtained from the un-doped ZIF-8 under the same condition **(bottom)** in which broad band around 25° originated from carbon matrix was observed, and no diffraction peaks corresponding to any crystalline Fe spaces, such as metal, carbide or nitride, were shown, indicating that Fe elements existed as single-atom species in the pyrolysis product of the Fe(II) doped ZIF-8 precursor of the invention. Inductively coupled plasma-optical emission spectroscopy (ICP-OES) analysis confirmed the existence of Fe and Zn in the pyrolysis product from the Fe(II) doped ZIF-8 precursor of the invention, with the weight fractions of Fe and Zn as 2.2 % and 4.3 %, respectively. **Figure 3a and 3b** show TEM and HRTEM characterizations of the pyrolysis product of the Fe(II) doped ZIF-8 precursor of the invention obtained in Example 2. The material shows high porosity and no crystalline nanoparticles are observed. **Figure 3c** show the element distributions of Fe, N and Zn obtained by EDS mapping which are homogeneous in the material.

Further characterization of the Fe(II) doped ZIF-8 precursor obtained according to Example 1 and its pyrolysis product obtained according to Example 2 was conducted by SEM **(****Figures 4****)** and compared to a comparative Fe(III) doped ZIF-8 and its pyrolysis product Fe-N-C (III) **(****Figure 5****).** Comparative Fe(III) doped ZIF-8 precursor was obtained according to a reported method (Chen, et al. 2017, Angew. Chem. Int. Ed., 56, 6937-6941)*:* First, 1.314 g of 2-mIm was dissolved in 15 mL of MeOH to form a solution A. 0.141 g of Fe(III) acetylacetonate (Fe(acac)₃) and 1.190 g of Zn(NO₃)₂·6H₂O were dissolved in 30 mL of MeOH to form a solution B. Then, solution B was added into solution A dropwise under stirring at room temperature in 1 hour. The solution was then transferred into a 100 ml Teflon-lined stainless-steel autoclave and heated at 120 °C for 4h. The obtained product was separated by centrifugation and washed subsequently with DMF for third and methanol for twice and finally dried at 70 °C under vacuum for overnight. The pyrolysis product of comparative Fe(III) doped ZIF-8 precursor was obtained as a black powder through pyrolysis in a tube furnace with N₂ flow with a flow rate of 100 mL·min⁻¹ at 900 °C for 3 hours with a ramping rate of 5 °C·min⁻¹.

As can be seen on **Figures 4****,** before pyrolysis **(a and b),** the Fe(II) doped ZIF-8 precursor material is in the form of polyhedrons with an average size of 218±35 nm and the surface is smooth. After pyrolysis **(c to e),** the particle size decreased to 134±21 nm and the surface of those became very rough and some nanotubes were generated. Figure **4f** shows the size distribution as measured from Figure **4a** for Fe(II) doped ZIF-8 and Figure **4c** for the corresponding pyrolyzed material. **Figure 5** clearly shows the SEM images of a comparative Fe(III) doped ZIF-8 precursor **(a and b)** and its pyrolysis product **(c and d).** The average particle size decreased from 205±34 nm to 112±22 nm during the pyrolysis as shown on Figure **5e****,** where the size distributions are measured from Figure **5a** for Fe(III) doped ZIF-8 and Figure **5c** for corresponding pyrolyzed material. The surface of Fe-N-C(III) material is smoother than that of Fe-N-C(II) material after pyrolysis and no nanotube was formed.

### Example 4: Electrochemical characterization of the catalytic material of the invention

The performances of as a catalyst for CO₂ reduction have been tested for the pyrolysis material prepared from a Fe(II)-doped zeolitic imidazole framework (ZIF) according to the invention in an electroreduction system as follows: To prepare a catalyst ink, 3 mg of the material and 40 µL of Nafion® perfluorinated resin solution (5 wt.%, Sigma) were dispersed in 1 mL of ethanol by ultrasonic treatment for 30 min. Belt-shape carbon cloth (Fuel Cell Store) was used as the working electrode. The area exposed to the electrolyte was fixed at 1 cm² by shading the carbon cloth by sealing film. 200 µL of catalyst ink was loaded on the carbon cloth by drop-drying in 4 times. Thus, the loading of catalyst on carbon cloth was 0.6 mg·cm⁻². Nafion® was used to bind the material to the carbon cloth electrode. Electrochemical characterizations were carried out in an electroreduction system in the form of a Gamry Reference 3000 electrochemical instrument using an air-tight two-chamber cell as schematized on **Figure 6a****.** Working and reference electrodes were fixed in one chamber and counter electrode in the other one. The two chambers were separated by an anion exchange membrane (fumasep® FAA-3-PK-130). Ag/AgCl electrode with saturated KCl filling solution and Pt wire were used as reference and counter electrodes, respectively. 0.5 M KHCO₃ aqueous solution was used as the electrolyte in the chamber of the working electrode and was stirred vigorously during the experiments. The working electrode side was bubbled with CO₂ or N₂ for at least 30 min to get the electrolyte saturated. The inlet gas was pre-humidified by 0.5 M KHCO₃ solution to minimize the evaporation of the electrolyte.

**Figure 6b** compares the cyclic voltammetry (CV) curves of the pyrolysis products of Fe(II)-doped ZIF-8 and of un-doped ZIF-8 (obtained by pyrolysis according to the procedure described in **Example 2**) in N₂ and CO₂ saturated electrolyte. The catalytic material of the invention shows significantly increased current density in CO₂ saturated electrolyte between -0.25 V and -0.5 V vs RHE, and much higher than that of pyrolysis product of un-doped ZIF-8, implying Fe single atom sites may exhibit CO₂ reduction ability in this potential range. **Figure 6c** shows the chronoamperometry curve of the material of the invention in CO₂ saturated electrolyte at -0.36 V vs RHE. The current density kept constantly at about 7 mA·cm⁻². CO, and very small amount of H₂, were the only product detected by gas chromatography (GC) and no product in solution phase was detected by H¹-nuclear magnetic resonance (H¹-NMR), supporting the high specificity of the reaction. The Faraday efficiency of CO kept above 80% during this 1-day electrolysis. **Figure 6d** shows the Faraday efficiency of CO and H₂ of the Fe-N-C(II) material of the invention at different applied potentials. It can be seen that the Faraday efficiency of CO was higher than 80% between - 0.21 V and -0.46 V vs RHE. **Figures 6e and 6f** compare the Faraday efficiency and partial current density of CO formation, respectively, of the Fe-N-C(II) material of the invention and some recently reported catalysts with the highest CO formation activity. Surprisingly, the Fe-N-C(II) material shows comparable partial current density of CO formation with oxide derived Au (OD Au), one of the most active catalysts for CO formation in literatures (*Chen et al., 2012, supra*) at a certain applied potential, and significantly higher than that of other earth abundant metal based catalysts, namely the best Fe-N-C(III) material described in *Huan et al., 2017, supra* (Fe 0.5d), CoPc/CNT material described in *Zhang, et al., 2017, supra* and Porous Ag material described in *Lu, et al., 2014, supra.*

### Example 5: Characterization of the pyrolyzed product of Fe(II) doped zinc imidazolate (ZIF-8) precursor after electrolysis

The stability of the catalytic material of the invention was assessed by electron microscopy as described under Example 3 carried out after the electrolysis test conducted as described in Example 4 **(****Figure 7****).** After the electrolysis, the carbon cloth electrode was rinsed with deionized water and immerged in 0.5 mL of ethanol. A dispersion of the catalyst after electrolysis was obtained after ultrasound treatment for about 1 h, which was then used for electron microscopy characterizations. It can be seen that no segregation of Fe single atoms to form nanoparticles was observed in the catalytic material of the invention, as indicated by the TEM and HRTEM images **(****Figures 7a** and **7b****, respectively).** The EDS-mapping result **(****Figure 7c****)** still shows high dispersity of Fe **(c2),** Zn **(c3)** and N **(c4)** on carbon matrix and the EDS spectra of catalytic material of the invention ("Fe-N-C(II)") before **(top)** and after electrolysis **(bottom)** show similar Fe:Zn ratios (39:61 and 43:57, respectively) **(****Figure 4d****),** indicating high stability of the catalytic material of the invention during CO₂ electroreduction.

In summary, the catalytic material comprising single-atoms Fe dispersed on N-doped carbon matrix obtained through the pyrolysis of Fe(II) doped ZIF-8 shows high selectivity and activity to CO formation in CO₂ electroreduction in an aqueous electrolyte. The obtained Faraday efficiency of CO was higher than 80% and the partial current density of CO was comparable to that of OD Au at low overpotential region, which is one of the most active catalysts for CO reduction ever reported (*Chen et al., 2012, supra*). Due to its high activity of CO formation and the high abundance of Fe, this material is a promising catalyst used in the practical conversion of CO₂ to CO and other chemicals.

## Claims

1. Use of a catalyst material containing Fe single atom on N doped carbon matrix prepared from a Fe(II)-doped zeolitic imidazole framework (ZIF) for the electroreduction of CO₂ to CO.

2. A method for the preparation of a catalyst material comprising the steps of:
**a)** Providing a Fe(II)-doped zeolitic imidazole framework (ZIF) in dried form under inert atmosphere;
**b)** Subjecting said Fe(II)-doped ZIF to a pyrolysis under inert atmosphere during about 2 to about 24 hours, typically 3 hours;
**c)** Collecting the obtained pyrolysis product as a catalyst material.

3. A method according to claim 2, wherein the pyrolysis under step b) is carried out at a temperature between about 800 and 950 °C.

4. A method according to claim 2 or 3, wherein the pyrolysis under step b) is carried out through the ramping of temperature at a rate of about 3 to 10 °C. min⁻¹.

5. A method for the preparation of a Fe(II)-doped ZIF material comprising the steps of:
**(i)** Providing an imidazole or imidazole derivative precursor;
**(ii)** Dissolving the said imidazole or imidazole derivative precursor in degassed polar solvent, in a reductive atmosphere to prevent the oxidation of Fe²⁺ cations to obtain a solution A;
**(iii)** Dissolving an iron (II) precursor and a Zn salt in degassed polar solvent to obtain a solution B;
**(iv)** Adding solution B into solution A;
**(v)** Collecting and washing the precipitate;
**(vi)** Leaving the washed precipitate drying at room temperature to obtain a Fe(II)-doped zeolitic imidazole framework (ZIF) in the form of a dry powder, wherein steps (ii) to (vi) are conducted under stirring in an inert atmosphere.

6. A method according to claim 5, wherein solution B is added into solution A dropwise under stirring for about 1 hour under step (iv).

7. A method according to any one of claims 5 to 6, wherein the reacting mixture from step (iv) is kept under stirring under inert atmosphere for about one day after the completion of the addition of solution B.

8. A method according to any one of claims 5 to 7, wherein said imidazole precursor is 2-methyl imidazole.

9. A method according to any one of claims 5 to 8, wherein said iron (II) precursor is FeCl₂.

10. A method according to any one of claims 2 to 9, wherein the inert atmosphere is provided by a N₂ flow.

11. A method according to any one of claims 5 to 10, wherein the precipitate is collected under step (v) by ambient-pressure filtration or centrifugation under inert atmosphere.

12. A method according to any one of claims 2 to 4, wherein the provided Fe(II)-doped zeolitic imidazole framework (ZIF) is obtained from a process according to any one of claims 5 to 11.

13. A catalyst material containing Fe single atom on N doped carbon matrix obtainable from a method according to any one of claims 2 to 4 or 12.

14. Use according to claim 1, wherein the catalyst material is obtained from the pyrolysis of a Fe(II)doped- ZIF-8.

15. Use according to claim 1 or 14 wherein said catalyst material is a material according to claim 13.

16. An electroreduction system for the electrochemical reduction of CO₂ comprising a catalyst material prepared from a Fe(II)-doped zeolitic imidazole framework (ZIF).

17. A kit for the preparation of a catalyst material according to the invention, the kit comprising at least one container comprising a Fe(II)-doped zeolitic imidazole framework (ZIF) in dry form and under inert atmosphere.

18. A kit for the preparation of a Fe(II)-doped zeolitic imidazole framework (ZIF), said kit comprising in separate compartments or containers:
a) an imidazole or imidazole derivate precursor;
b) an iron (II) precursor such as FeCl₂ or Fe(CH₃COO)₂;
c) a zinc salt such as Zn(NO₃)₂ or ZnCl₂ and
d) optionally a reductive agent to prevent oxidation of the Fe²⁺ ions such as an iodide derivative such as potassium, sodium or ammonium iodide.
